# EUROPEAN PATENT APPLICATION

(11) **EP 4 796 473 A1**
(43) Date of publication of application: **26.08.2026**
(21) Application number: 26160319.5
(22) Date of filing: 24.02.2026
(51) Int. Cl.: B65H 3/10, B65H 3/20, B65H 3/16, B65H 1/08, B65H 1/30, B65H 3/44, B65H 15/00, H01M 10/04

(54) **DEVICE FOR SELECTIVE FLIPPING OF A SHEET ELECTRODE, METHOD TO SELECTIVELY FLIP A SHEET ELECTRODE, CORRESPONDING APPARATUS FOR THE MANUFACTURE OF AN ELECTROCHEMICAL CELL, AND CORRESPONDING METHOD FOR THE MANUFACTURE OF AN ELECTROCHEMICAL CELL**

(30) Priority: 25.02.2025 IT 202500003753; 25.02.2025 IT 202500003756
(71) Applicant: G.D S.p.A., 40133 Bologna (BO) (IT)
(72) Inventor: MONTEMURRO, Salvatore, Bologna BO (IT); VILLA, Stefano, Bologna BO (IT); FORTINI, Massimo, Bologna BO (IT)
(74) Representative: Pietri, Simona

(57) **Abstract**

The present invention relates to a selective tilting device of a sheet electrode, which is to say, to a method for selectively flipping said electrode.

The present invention is moreover intended for an apparatus for the manufacture of electrochemical cells or semi-finished electrochemical cell products which employs the aforementioned selective flipping device of the sheet electrode, as well as the method implemented by such device.

In particular, the present invention is intended for use in the manufacture of electrochemical cells comprising an alternating and stacked plurality of positive and negative electrodes, with an interposed separation layer in dielectric material, so-called prismatic cells.

## Description

The present invention relates to a selective flipping device of a sheet electrode, which is to say, to a method for selectively flipping said electrode.

The present invention is moreover intended for an apparatus for the manufacture of electrochemical cells or semi-finished electrochemical cell products which employs the aforementioned selective flipping device of the sheet electrode, as well as the method implemented by such device.

An electrochemical cell is a device capable of converting chemical energy into electrical energy (and/or vice versa), such as galvanic cells, both primary and secondary, capacitors (including supercapacitors), fuel cells, or electrolytic cells. The present invention finds a preferred, though not exclusive, application in the field of electrochemical cell production for the manufacture of secondary electric batteries, also known as rechargeable batteries, which can be charged and discharged multiple times.

In particular, the present invention is intended for use in the manufacture of electrochemical cells comprising an alternating and stacked plurality of positive and negative electrodes, usually of rectangular shape, with an interposed separation layer of dielectric material, so-called prismatic cells.

The sheet electrode has a substantially flat shape. Sheet electrodes are herein used to refer to, for example, single electrode plates, pouch-type electrodes, or electrode plates coated with at least one separator layer. In general, sheet electrode refers to any type of electrode that has a substantially plate-like shape and defines two opposite planar faces.

In the cell, the electrodes are stacked on top of one another by superimposition on said planar faces.

Moreover, the electrode has a protuberance (tab) which is aimed to define an electrical connection of the electrochemical cell.

Depending on the shape and positioning of the tab, the electrode can have its own intrinsic asymmetry, therefore, in a stack of electrodes, each of them must be arranged in the same orientation to have superimposed tabs in regular alignment.

It is the experience of the Applicant that common apparatuses for the manufacture of prismatic electrochemical cells comprise at least one electrode supply magazine, a conveyor belt that carries the electrode to a workstation such as, for example, a cell assembly station, and one or more manipulators, which pick-up the electrodes from the at least one magazine and place them on the conveyor belt.

An example of the assembly station is described in patent application WO2024/074998.

The electrodes within the single magazine can be arranged haphazardly or in a stack, which is not necessarily orderly.

The manipulator must therefore not only pick up the electrode and carry it to the belt but, in some cases, must also move it in space with one or more axial rotations to arrange it on the belt according to a desired orientation, which is functional to the creation of the cell.

The term "orientation" in this specific case refers to the arrangement of the electrode with one face exposed, both on the magazine and on the belt. In greater detail, if the electrode defines a first face and a second face opposite to the first, placing itself in support on the second face - thereby exposing the first face - the electrode assumes a first orientation. Otherwise, placing itself in support on the first face and exposing the second, the electrode assumes a second orientation. This applies, for example, both as regards the arrangement in the magazine as well as on the conveyor belt.

The Applicant noted that this type of solutions, which is widely used, presents quite a few problems.

First of all, the pick-up of the electrode from the magazine with a manipulator is not error-free. For example, when the electrode is supplied inside the magazine in a stack, grasping the first electrode can cause the electrode underneath to also move or for the two electrodes to rub against one another; in this case, the risk of damaging the electrode underneath is high.

Once again, the Applicant noted that to efficiently pick up the electrode from the magazine and carry it to the belt, the manipulator takes a significant amount of time which impacts the overall speed of cell manufacture.

This intrinsic slowness of the system is further increased if the manipulator is also required to move the electrode in space according to axial rotations to arrange it on the conveyor belt in an orientation different from the one of pick-up.

The Applicant has also noted that increasing the speed of the manipulator to reduce working times entails a significant risk both of damage to the electrode when being gripped as well as an increase of errors in orientation or, more simply, positioning on the belt.

Moreover, it is the experience of the Applicant' that the manipulator requires adequate maneuvering space, therefore the distance between the electrode magazine and the conveyor belt is not negligible, affecting both working times and the precision with which the electrode is positioned.

In order to overcome some of these problems, the Applicant is aware that solutions with multiple magazines and/or multiple manipulators have been developed in the state of the art. If, on the one hand, this type of solutions appear to speed up the electrode supply times to the belt, on the other hand the overall configuration of the apparatus is decidedly complex from a technical point of view, and the space required for moving the manipulators and positioning the magazines is significantly increased.

Therefore, starting from this state of the art, the Applicant has developed a solution that overcomes the problems outlined above.

In particular, the Applicant has developed a selective flipping device of a sheet electrode, which preferably comprises a gripping station defining a plane XY wherein the electrode is arranged in a first orientation AB.

Preferably, the device moreover comprises gripping means comprising at least a first roller element rotatable about an own axis of rotation X1 and configured at least to pick up the electrode from the gripping station with a rolling motion.

The Applicant has found that this brings numerous advantages. In particular, it allows the electrode to be picked up without creep, thus avoiding the risk of damage due to frictional movement on the surface of the gripping station or possibly on an electrode underneath.

Preferably, the first roller element, at least rotatable about an own axis of rotation X1, presents at least one cylindrical sector defining a peripheral surface configured to pick up and retain the electrode.

This has the advantage that the electrode is positioned adhering to the peripheral surface and the grip is stable and controlled.

Preferably, the device moreover comprises means for flipping the electrode which in turn comprise at least one further roller element rotating about an own axis of rotation X2, having at least one cylindrical sector defining a peripheral surface configured to pick up and retain the electrode downstream of the first rotating roller element.

Preferably, the flipping means moreover comprise means for controlling the direction of rotation of the first roller element and/or of the further roller element configured to selectively control the direction of rotation about the axes of rotation X1, X2, whereby the electrode picked up from the gripping station according to the first orientation is selectively flipped to assume a second orientation.

Preferably, the device comprising, moreover, electrode retaining means relating to the peripheral surface of the roller elements.

Preferably, the retaining means are switchable between an activated function wherein they exert the action of attraction of the electrode and keep it adhered to the peripheral surface and a deactivated function wherein they do not exert said action of attraction and release the electrode.

Advantageously, this allows the electrode to be moved between one roller element and the other or between a roller element and a releasing surface, as well as also to move the roller element of the gripping means above the gripping station without picking up the electrode, should this become necessary.

Preferably, the means for retaining said electrode comprise one or more suction nozzles for suctioning the electrode in adherence against the peripheral surface.

Preferably, the device comprises handling means for moving the at least one first roller element of the gripping means in rotation on the gripping station and from the gripping station to a position tangential to the at least one further roller element of the flipping means.

Preferably, said handling means comprise a support frame rotatable about an own axis of rotation X3, parallel to the axis of rotation X1 of said at least one first roller element of said gripping means.

Preferably, said rotatable support frame is configured to rotate about an own axis of rotation X3 according to a first direction of rotation, wherein said at least one first roller element is connected to said rotatable support in a peripheral position and is rotatable according to a direction of rotation opposite to said first direction of rotation; wherein said at least one first roller element is connected to said rotatable support by means of an articulated joint movable with respect to said rotatable support; wherein said at least one further roller element includes a first further roller element rotatable about an own axis of rotation X2', wherein it has a cylindrical sector configured to pick up and retain said electrode and a second further roller element rotatable about an own axis of rotation X2" and tangent to said first further roller element, wherein said second further roller element has a cylindrical sector configured to pick up and retain said electrode.

Preferably, said at least one first roller element of said gripping means is connected to the rotatable support frame in a peripheral position thereof, in a planetary configuration, by means of an articulated joint.

Preferably, the articulated joint comprises at least a first arm, a first end of which is rotatably connected about an own axis of rotation X4 to the rotatable support frame and a second end of which rotatably supports, about an own axis X1, said at least one first roller element of said gripping means.

Preferably, the articulated joint moreover comprises a second arm, which has a first end slidably bound to the first arm and a second end bound to the rotatable support frame which is rotatable on a circular trajectory.

Preferably, the articulated joint is such to linearize the motion of the at least one first roller element of the gripping means along a rectilinear trajectory Y tangential to the aforementioned electrode arranged in the gripping station.

Together with the rotation of the roller element about an own axis, this makes it possible to obtain the rolling motion mentioned above.

Preferably, the rotatable support frame is fitted in an orderly and circumferentially spaced manner with a plurality of gripping means, each comprising a roller element.

Preferably, the flipping means comprise two roller elements, tangent to one another.

Preferably, the further roller element is configured to selectively reverse its direction of rotation about said axis X2 after picking up said electrode from said first roller element and wherein one roller element of said two roller elements comprises at least one cylindrical sector defining a peripheral surface configured to pick up and retain said electrode downstream of said further rotatable roller element.

Preferably, the flipping assembly comprises a third roller or portion of a roller, tangent to the pair of roller elements, the three rollers being mutually tangent.

Preferably, the device moreover comprises a conveyor belt for feeding the electrode to a workstation, which moves said electrode according to a supply direction Y', wherein said conveyor belt defines at least one linear section extending according to a longitudinal axis Y and movable according to said supply direction Y', wherein said linear section defines a support plane XY' movable according to said supply direction, wherein said movement of said linear section in said supply direction Y' is provided by the rotation of belt tensioning rollers, rotatable according to an own direction of rotation.

Preferably, the further roller element of said flipping means is located tangent to the linear section of said belt and is configured to transfer said electrode to said conveyor belt.

Preferably, the first roller element of said gripping means is moved by said handling means between a gripping position of the electrode from said gripping station to a tangential position to said linear section of said conveyor belt.

Preferably, the first roller element is configured to selectively deliver said electrode to said conveyor belt.

The present invention moreover relates to a method for selectively flipping a sheet electrode, preferably comprising the step of making said electrode available at a gripping station according to a first orientation AB.

Preferably the method moreover comprises the step of grasping said electrode from said gripping station according to said first orientation AB by means of gripping means comprising a roller element, with a rolling motion of said roller or roller portion on said electrode.

Preferably, the method moreover comprises the step of moving said roller element of said gripping means between said gripping station and a position tangential to a further roller element of the flipping means, wherein said further roller element is rotatable about an own axis of rotation X2.

Preferably, the method moreover comprises the step of selectively controlling in the direction of rotation about said axes of rotation X1, X2 said first roller element of said gripping means and/or said further roller element of said flipping means, whereby said electrode picked up from said gripping station according to said first orientation AB or second orientation BA is selectively flipped to assume a second orientation BA or first orientation AB.

Preferably, the step of selectively controlling in the direction of rotation about said axes of rotation X1, X2 of said first roller element of said gripping means and/or of said further roller element of said flipping means comprises reversing the direction of rotation and is carried out when said electrode is grasped respectively by said first roller element of said gripping means and/or by said further roller element of said flipping means.

Preferably, the step of moving said roller element of said gripping means between said gripping station and a position tangential to at least one further roller element of the tilting means includes: transferring said electrode from said at least one roller element of said gripping means to a further first roller element of the tilting means and transferring said electrode from said first further roller element of said tilting means to a second further roller element of said tilting means in a position tangential to said first further roller element, rotatable with respect to an own axis of rotation X2".

The invention moreover relates to an apparatus for the manufacture of an electrochemical cell or a semi-finished electrochemical cell product comprising a selective flipping device according to the invention.

Preferably, the apparatus according to the invention comprises one or more magazines for containing an ordered plurality of electrodes oriented according to a first orientation AB or second orientation BA, each of said one or more magazines defining said gripping station of said flipping device,

Preferably, a feed conveyor belt is moreover comprised at a workstation that moves said electrode according to a supply direction Y', wherein said conveyor belt defines at least one linear section extending according to a longitudinal axis Y and movable according to said supply direction Y', wherein said linear section defines a support plane XY' movable according to said supply direction, wherein said movement of said linear section in said supply direction Y' is provided by the rotation of belt tensioning rollers, rotatable according to an own direction of rotation.

Preferably, the at least one further roller element of said flipping means rotates in a second direction of rotation opposite to the direction of rotation of said belt.

Preferably, said electrodes in said one or more magazines are arranged in a stack, superimposed one on top of the other.

Preferably, said apparatus moreover comprises an assembly station downstream of said conveyor belt, comprising a stacking table, configured to alternatingly receive electrodes and separator to form the electrochemical cell or the semi-finished electrochemical cell product.

The invention moreover relates to a method for the manufacture of an electrochemical cell or a semi-finished electrochemical cell product in an apparatus according to the invention. The method preferably comprises the step of grasping said electrode from said gripping station according to said first orientation AB by means of gripping means comprising a roller element, with a rolling motion of said roller or roller portion on said electrode.

Preferably, the method moreover comprises the step of moving said roller element of said gripping means between said gripping station and a position tangential to a further roller element of the flipping means, wherein said further roller element is rotatable about an own axis of rotation X2.

Once again, the method preferably comprises the step of selectively controlling in the direction of rotation about said axes of rotation X1, X2 said first roller element of said gripping means and/or said further roller element of said flipping means, whereby said electrode picked up from said gripping station according to said first orientation AB or second orientation BA is selectively flipped to assume a second orientation BA or first orientation AB.

Preferably in the method according to the invention, said first roller element or said further roller element are tangent to said rectilinear section of said conveyor belt and are both configured to selectively transfer said electrode to said conveyor belt.

These and further features and advantages of the present invention will emerge more clearly from the following description of its embodiments, given by way of example and not to be deemed to pose limitations, with reference to the attached drawings wherein:
- Fig. 1 represents a first variant of a first embodiment of the invention;
- Fig. 2 represents a first operating condition of the first embodiment of Fig. 1;
- Fig. 3 represents a second operating condition of the first embodiment of Fig. 1;
- Fig. 4, Fig. 4a, and Fig. 4b show a first variant of the first embodiment of the invention, wherein Fig. 4 shows a step of pick-up of the electrode, wherein Fig. 4a is an enlargement of a moment of pick-up of the electrode and Fig. 4b shows how the electrode is arranged on a roller element once it has been picked up;
- Fig. 5 and Fig. 6 show a first and a second operating condition of the first variant of the first embodiment;
- Fig. 7 shows a first variant of a second embodiment;
- Fig. 8 and Fig. 9 show a first and a second operating condition of the first variant of the second embodiment;
- Fig. 10 shows a second variant of the second embodiment;
- Fig. 11 and Fig. 12 respectively show a step of pick-up of the electrode, in an enlargement of a moment of pick-up of the electrode, Fig. 12 is an enlargement of how the electrode is arranged on a roller element once it has been picked up;
- Fig. 13 shows a tangential position of the gripping roller element to a first roller element of a flipping assembly;
- Fig. 14 and Fig. 15 show a first and a second operating condition of the first variant of the second embodiment;
- Fig. 16 shows a third embodiment, and in particular a step of pick-up of the electrode and a position of the roller element tangent to a first roller element of a flipping assembly;
- Fig. 17 and Fig. 18 show a first and a second operating condition of the third embodiment;
- Fig. 19 shows a fourth embodiment of the device according to the invention;
- Fig. 20 shows a step of pick-up of the electrode, in an enlargement of a moment of pick-up of the electrode, in a further enlargement the positioning of the electrode in a gripping roller element;
- Fig. 21 shows the step of the gripping roller element in a position tangential to a flipping assembly;
- Fig. 22 through Fig. 24 show the exchange of the electrode between the gripping roller element and the flipping assembly and inside the flipping assembly;
- Fig. 25 shows the exchange of the electrode between the flipping assembly and the roller element of the gripping means;
- Fig. 26 shows the electrode being unloaded onto the conveyor belt;
- Fig. 27 shows an alternative operating configuration of the fourth embodiment;
- Fig. 28 shows a fifth embodiment of the device according to the invention;
- Fig. 29 through Fig. 33 show a step of exchange of electrodes between two roller elements of the gripping means and the flipping assembly;
- Fig. 34 shows the electrode being unloaded onto the conveyor belt; and
- Fig. 35 shows an alternative operating configuration of the fifth embodiment;

With reference to the above figures, a selective flipping device of a sheet electrode is shown.

The electrode defines two main planar faces delimited by free edges. The exposed face of the same electrode determines the orientation of the electrode. Therefore, if the electrode is placed resting on a first face and has the second face exposed, a first orientation AB is defined. If the electrode is placed resting on a second face and has the first face exposed, a second orientation BA is defined. For ease of understanding, the free edges of the electrode are indicated by the letters A and B in the drawings. Evidently, the arrangement of the free edges according to a linear sequence A-B implies that the electrode assumes the first orientation AB, in contrast, the arrangement of the free edges according to a linear sequence B-A implies that the electrode assumes the second orientation BA. The indication of the edges and of the orientation in the figures is entirely indicative and an opposite indication can also be used without this implying changes in the understanding of the text or of the device.

In general, the device comprises at least:
- an electrode gripping station wherein the electrode is arranged according to a first orientation;
- means of gripping the electrode from the gripping station;
- means of flipping the electrode to selectively change its orientation.

The gripping station 1 defines a plane XY on which the electrode rests, where Y is a longitudinal axis and X is a transverse axis perpendicular to the plane Y.

A peculiar aspect of the device according to the invention is that the pick-up of the electrode by the gripping means occurs without any creep. The gripping means, in fact, pick up the electrode from the gripping station with a purely rolling motion consisting of two motion components, one of rotation about a axis of rotation X1 and one of translation about an axis of translation Y1, where these axes are parallel to the axes X and Y defining the electrode support plane.

The device according to the invention is such as to supply the correctly oriented electrode to a workstation of an apparatus for the manufacture of electrochemical cells or semi-finished electrochemical cell products. In a traditional configuration, the apparatus comprises a conveyor belt 2 which carries the electrodes to the workstation, according to a supply direction Y'.

In greater detail, the conveyor belt is a closed loop, wound on tensioning rollers that rotate with respect to own axes and are moved according to a first direction of rotation of these tensioning rollers. The conveyor belt defines at least one linear section 20 which develops according to a longitudinal axis Y. The linear section is movable according to the aforementioned supply direction Y' defined on the axis Y. The linear section of the conveyor belt defines a support plane XY' movable according to this supply direction.

The apparatus moreover comprises one or more electrode storage magazines 1, each of which defines a gripping station for the flipping device.

According to a preferred solution, the magazine is filled with a stacked plurality of electrodes. Therefore, the gripping means of the device according to the invention, single out the electrode when being gripped at the top of the stack, picking it up separately from the electrodes underneath.

The rolling motion of the gripping means on the electrode therefore allows the electrode to be singled out without slippage or friction with the electrode underneath during stacking.

The magazine can be fixed or movable. In this second case, the magazine can translate on a longitudinal axis that is parallel to the longitudinal axis Y or alternatively with respect to an axis Z that is vertical and perpendicular to the axes X and Y.

In a preferred solution, the gripping means comprise a roller element 3 rotatable about an own axis of rotation X1.

In general, in this description, roller element refers to an element having a cylindrical shape, however also to an element defined by one or more cylindrical sectors arranged circumferentially and spaced apart one from another.

Once again, the definition of a roller element also comprises an element having a substantially cylindrical shape but with a non-constant radius along the entire circumferential development, which is to say, an element that has at least one cylindrical sector with a constant radius and tapered areas with a reduced radius.

In the figures, for simplicity of representation, the roller element is represented with a circular cross-section with a constant radius, without prejudice to the variants described above.

As will be discussed hereinafter in more detail with the help of the description of the individual embodiments, the flipping means also comprise one or more roller elements.

The roller element 3 is then configured to pick up and retain the electrode. In particular, at least one of the cylindrical sectors of the same comprises reversible means for retaining the electrode in adherence to the peripheral surface of the sector itself. The sheet electrode is then wrapped around the peripheral surface of the cylindrical sector of the roller element. In a preferred embodiment, the reversible retaining means comprise suction nozzles that affect the perimeter surface of the roller element to create a vacuum on it that attracts and retains the electrode in an adhered position.

Alternative solutions are not excluded, such as the use of reversible magnetic retaining means able to retain the electrode by magnetic attraction or solutions with adhesive materials coating the peripheral surface.

The reversible retaining means are moreover switchable between an activated function wherein they exert the action of attraction of the electrode and keep it adhered to the peripheral surface and a deactivated function wherein they do not exert said action of attraction and release the electrode.

The flipping means moreover comprise at least one further roller element 4, rotatable about an own axis X2.

Once again, the flipping means moreover comprise means for controlling the direction of rotation of the first roller element 3 and/or of the further roller element 4 in such a way as to selectively control the direction of rotation about own axes of rotation, in order to selectively modify the orientation of the electrode.

The control means will not be described in detail, assuming that it is obvious to a person skilled in the art to select, among the numerous possibilities at their disposal, elements able to vary the direction of rotation of a rotatable roller element. For example, the control means can comprise a motor that acts on the axis of rotation of the roller element and an electronic control that controls the motion output of the motor. Evidently, other solutions could be provided.

Moreover, by convention, in this description all the axes parallel to the transverse axis X will be indicated as X', X", ... Xⁿ or as X1, X2, ..... Xn. All axes parallel to the longitudinal axis Y will be indicated as Y', Y", ...Yⁿ or as Y1, Y2, ....Yn.

We will now delve further into the merits of the invention by relying on the description of the individual examples, hereinafter described in detail.

### First embodiment

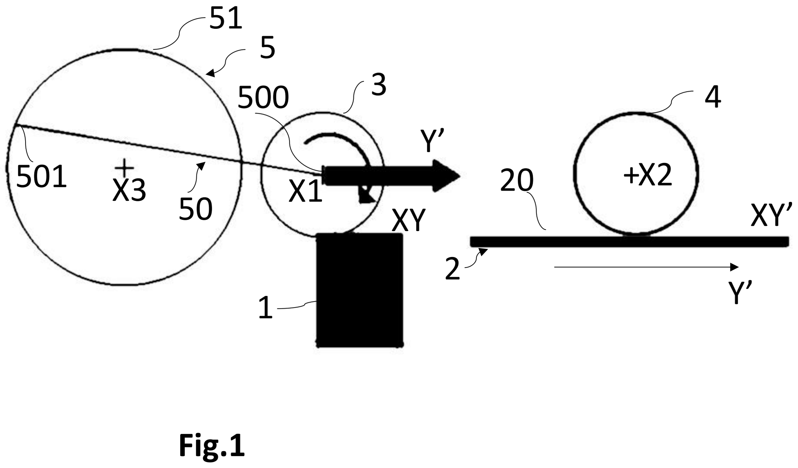

With reference to Fig. 1 through Fig. 3, a first variant of a first embodiment of the device according to the invention is shown wherein the gripping means comprise a first roller element 3. Said first roller element is brought into rotation on an electrode by means of an actuation system of the connecting rod-crank type, generically indicated by the reference number 5. The electrode is arranged in the gripping station - defining the support plane XY - according to a first orientation AB.

In greater detail, the first roller element is rotatable about an own axis X1 supported at one end 500 of a connecting rod 50. The opposite end 501 of the connecting rod is forced to move along a circular trajectory of constant radius defined on the periphery of a crank 51, rotating about an own axis of rotation X3. Due to the movement of the opposite end of the connecting rod along this trajectory, the first roller element 3 is movable in translation on an axis Y1. Depending on the direction of rotation of the crank about an own axis, the translation occurs in a specific direction.

The flipping means moreover comprise at least one further roller element 4, rotatable about an own axis X2.

The first roller element is movable between the gripping station, then between the pick-up with the electrode until a position tangential to the further roller element 4.

In this position, the electrode can be exchanged between the two roller elements which are mutually tangent to one another, which is to say, unloaded directly from the first roller element, by controlling, by means of the control means, the direction of rotation of the first and/or further roller element.

In the specific embodiment, the electrode is released by the flipping means directly onto the support surface 20 of the conveyor belt 2 of the apparatus for the manufacture of electrochemical cells.

In said solution, the further roller element is arranged tangent to the plane of the conveyor belt.

In the above-mentioned tangential position, the first roller element is also tangent to the support surface of the conveyor belt, placing itself in an aligned arrangement with respect to the further roller element.

As already described, the conveyor belt is moved by a rotational motion of the tensioning rollers according to a first direction of rotation, which can be clockwise or counterclockwise.

Said direction of rotation also determines the direction of the supply rotation Y'.

In order to be able to transfer the electrode between a roller element and the tangent or between a roller element 3 or 4 and the belt 2, the two roller elements or the roller element and the belt must be counter-rotating to one another, which is to say, have opposite directions of rotation on their axes of rotation.

Returning to the specific embodiment described, the first roller element 3 of the gripping means carries out a rolling motion on the electrode at the gripping station directed according to a direction consistent with Y', therefore it rotates according to a direction of rotation consistent with that of the conveyor belt.

If this direction of rotation is maintained, the first roller element can transfer the electrode only to the further roller element 4 of the flipping means, which has an opposite direction of rotation.

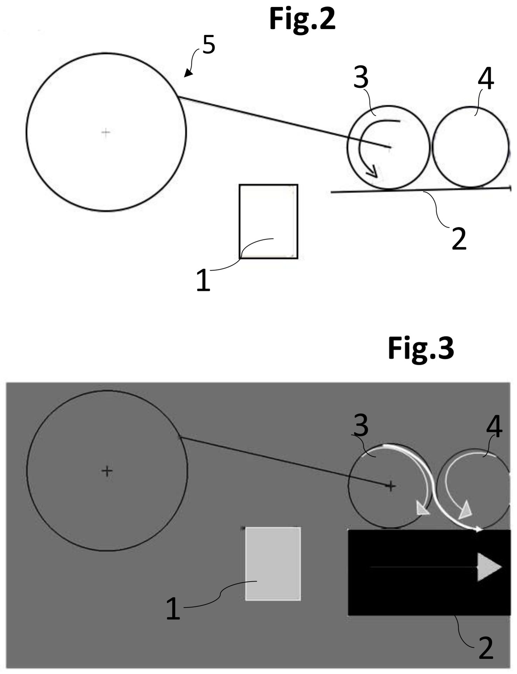

Once the electrode has been received, the further roller element in turn transfers it to the belt (Fig. 3).

If, however, the direction of rotation of the first roller element is reversed after receiving the electrode from the gripping station 1, once the tangential position to the further roller element and the belt has been reached, it can transfer the electrode directly to the belt, bypassing the further roller element (Fig. 2).

As regards the electrode, it is picked up from the gripping station according to an orientation AB, depending on the exposed face which is also the face that adheres to the peripheral surface of the gripping roller element.

In the case of Fig. 2, wherein the first roller element delivers the electrode directly to the belt, there is no flipping, therefore the electrode is delivered to the belt with the same orientation (same face exposed with respect to the gripping station).

Instead, in the case shown in Fig. 3, wherein the first roller element delivers flipping means to the further roller element, when passing between one roller and the other the electrode is flipped because the second roller (in functional sequence) picks it up from what was the support face and releases it onto the belt on the face that was exposed, therefore, the electrode will be placed on the belt in an orientation opposite to that of the gripping (exposed face different from the gripping station).

In order to facilitate the detachment of the electrode and its passage between the two roller elements or between the roller element and the conveyor belt, the reversible retaining means are switched to the deactivated condition.

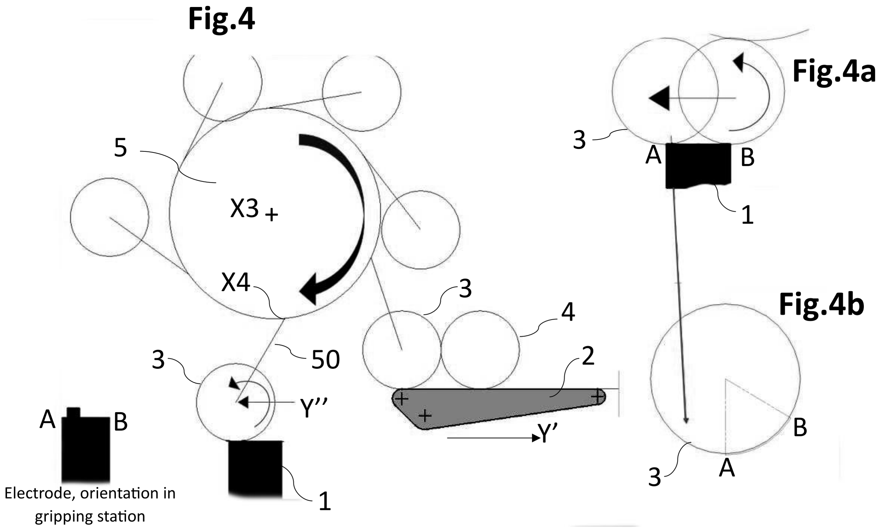

Fig. 4 through Fig. 6 show a second variant of the first embodiment.

The main difference between this variant and the previous one is that the first roller element 3 is connected to a support frame 5 that rotates about an own axis of rotation X3. As shown in the images, the first roller element 3 is connected to a periphery of the rotatable support frame, in a orbital position, by means of an articulated joint 50. The joint is at least rotational about an axis X4 parallel to the axis X3 and placed on the periphery of the rotatable support frame. The articulated joint is moreover such to linearize, along a rectilinear trajectory Y1, the motion of the roller element tangentially to the electrode arranged in the gripping station.

This planetary structure moves the first roller element 3 in a rolling manner on the gripping station in order to pick up the electrode, up to a position tangential to the further roller element 4 of the flipping means.

Similarly to the first variant of the first embodiment, the first roller element 3 is arranged tangent to the roller element 4 and tangential to the conveyor belt 2.

At the time of pick-up of the electrode from the gripping station, the direction of rotation of the rotatable support about its axis of rotation X3 is opposite to that of rotation of the first roller element about own axis of rotation X1.

In this variant of the embodiment, the rotatable support frame 5 has a direction of rotation in accordance with that of the belt, whereas the first roller element rotates in counter-rotation. Therefore, the rolling motion occurs according to a direction Y" which is opposite to the supply direction Y'.

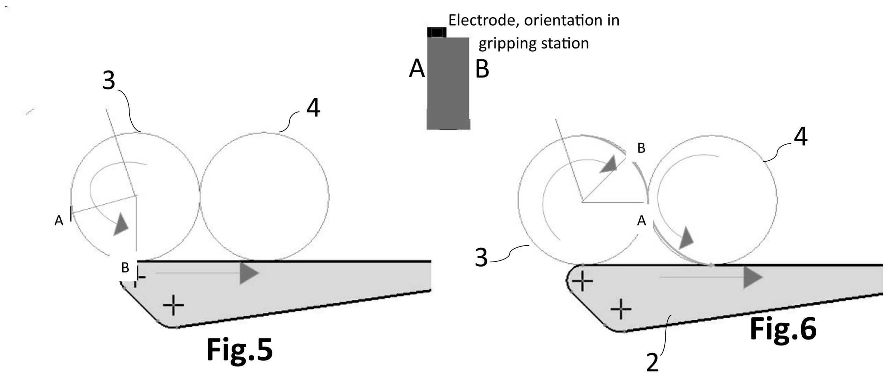

In the tangential position, if the first roller element maintains said direction of rotation, it unloads the electrode directly onto the belt, according to the gripping orientation (Fig. 5).

Otherwise, by reversing the direction of rotation, the first roller element passes the electrode to the further roller element of the flipping means, reversing its orientation. The further roller element, when exiting from the flipping device, then supplies the electrode to the conveyor belt in the reversed orientation to the gripping one (Fig. 6).

In this further embodiment variant of the first embodiment, the rotatable support can install on its periphery, in an orderly distribution, a plurality of first roller elements, each of which is configured to pick up in succession from the gripping station and enter into tangency with the further roller element and the conveyor belt.

This carousel structure allows for faster delivery times of the electrodes to the conveyor belt and then to the workstation.

### Second embodiment

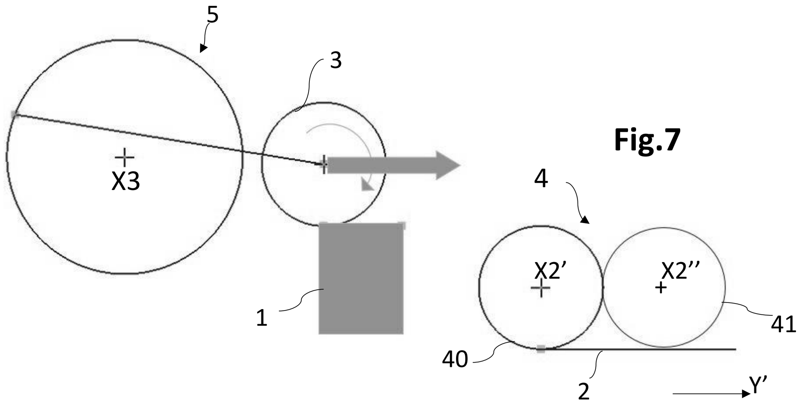

With reference to Fig. 7 through Fig. 9, a first variant of a second embodiment of the invention is described. The gripping means comprise a first roller element 3, whereas, in this case, the flipping means comprise two further roller elements tangent to one another and rotatable about respective axes X2', X2", which make up a flipping assembly 4.

This flipping assembly 4 is arranged tangent to the support surface 20 of the conveyor belt 2. The two further roller elements are moreover aligned, arranged in sequence according to the supply axis Y', defining a proximal roller element 40 and a distal roller element 41 of the flipping assembly, where the terms "proximal" and "distal" are defined depending on the position of the roller element with respect to the gripping station.

Going into greater detail, the first roller element is supported in motion by a connecting rod-crank system 5, already described for the first embodiment.

The first roller element 3 rotates according to a direction consistent with that of the conveyor belt 2 and moves towards the flipping assembly, according to a direction Y1 which is consistent with the supply direction Y', to pick up the electrode while rolling from the gripping station. The first roller element is moreover brought into a position tangential to the proximal roller element 40 of the flipping assembly.

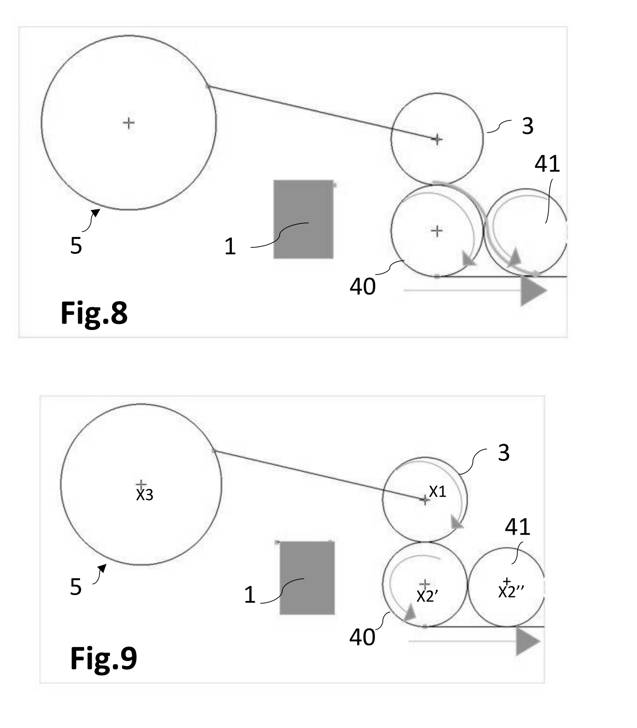

In said position, the first roller element exchanges the electrode with the proximal roller by tangential motion in two possible modes of operation:
1) The first roller element 3 maintains its direction of rotation and exchanges the electrode with the proximal roller 40 which has the opposite direction of rotation. Having a direction of rotation opposite to that of the belt, the proximal roller delivers the electrode directly to the belt in an orientation opposite to that of the gripping orientation (Fig. 9).
2) The first roller element 3 reverses its direction of rotation and exchanges the electrode with the proximal roller element 40. Once the electrode is exchanged between the first roller element and the proximal roller, a further exchange is carried out between the proximal roller element and the distal roller element 41. The two roller elements are in counter-rotation, where the distal roller element has the opposite direction of rotation to that of the belt. Once the electrode is gripped, the distal roller element transfers it to the belt in an orientation consistent with that with which it was picked up from the gripping station (Fig. 8).

The Applicant has noted that the modes of operation described above are those that should allow the electrode to pass from the gripping station to the releasing surface in the shortest time.

It is, nevertheless, generally possible to establish operational variants different from those described above, as a function of the direction of rotation of the roller elements and their control possibilities. For example, in an alternative mode to the second mode of operation mentioned above, the first roller element 3 exchanges the electrode with the proximal roller 40 by tangential motion while maintaining its direction of rotation opposite to the direction of rotation of the proximal roller. Once the electrode is exchanged between the first roller element 3 and the proximal roller 40, the proximal roller reverses its direction of rotation and a further exchange is carried out between the proximal roller element and the distal roller element 41. The two roller elements are in counter-rotation, where the distal roller element 41 has the opposite direction of rotation to that of the belt. Once the electrode is gripped, the distal roller element transfers it to the belt in an orientation consistent with that with which it was picked up from the gripping station (Fig. 8).

It is assumed that in the passages of the electrode between a roller element and the tangent and a roller element and the belt there is a switching of the retaining means between an activated and an deactivated condition and vice versa.

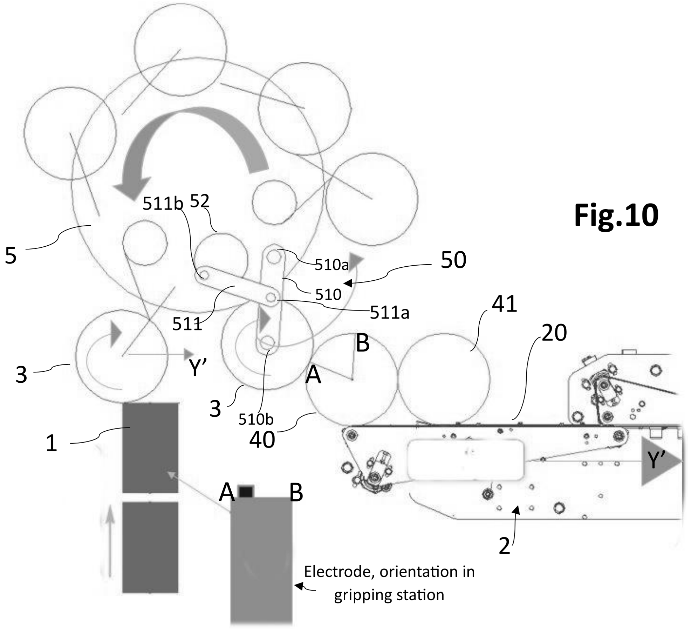

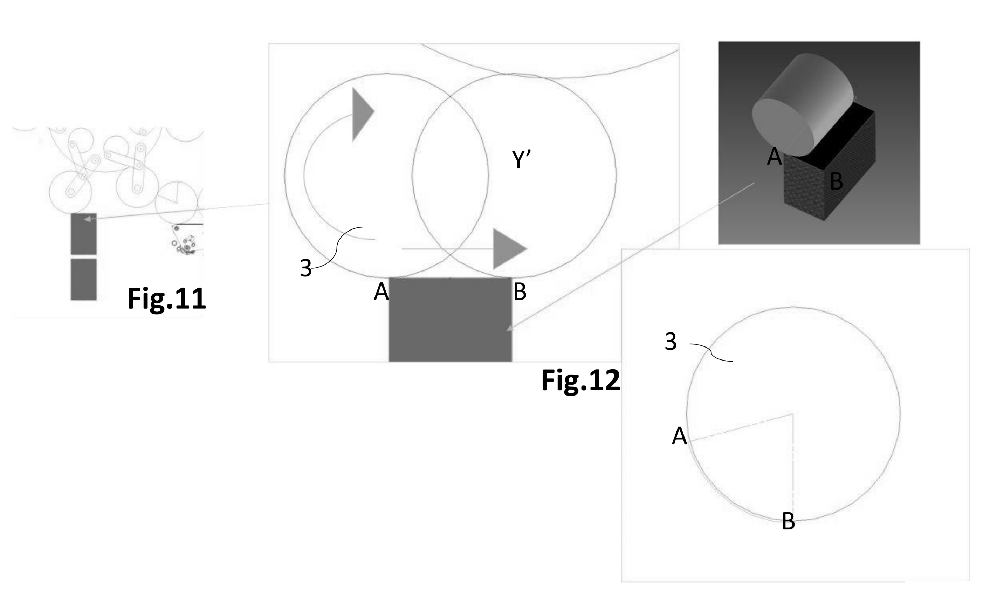

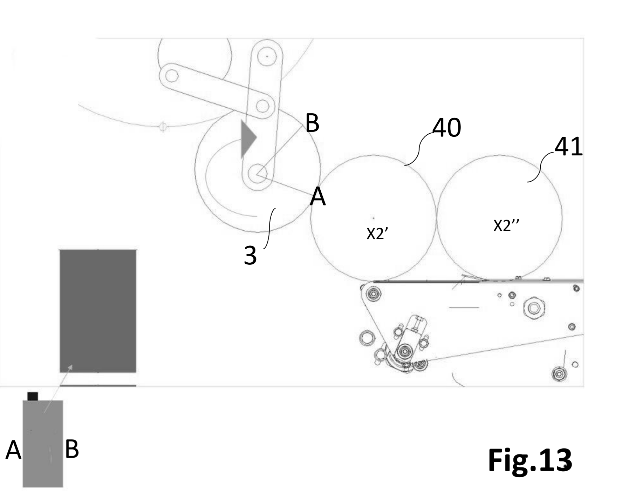

In a further variant, shown in Fig. 10 through Fig. 15, the first roller element is supported in a orbital position by a planetary structure 5 as already described for the first embodiment. In particular, the planetary structure comprises a rotatable support frame to which the first roller element is connected by means of an articulated joint 50.

The articulated joint comprises a first arm 510 extending between a first end 510a connected to a periphery of the rotatable support. The first arm 510 is articulated on the rotatable support frame 5 about a point of rotation X4 according to an axis X. A second end 510b of the first arm 510 rotatably supports the first roller element 3. The articulated joint moreover comprises a second arm 511, which has a first end 511a slidingly bound on the first arm and a second end 551b bound to a guide 52 with a circular trajectory that is integral with the rotatable support 5. Said articulated joint linearizes, in relation to the gripping station, the movement of the first roller element along a rectilinear trajectory Y1 tangentially to the electrode in the rolling motion.

In this further variant of the embodiment, the first roller element 3 rolls on the electrode on the gripping station according to a direction consistent with the supply direction and therefore with a direction of rotation consistent with that of the belt.

The rotatable support frame 5 is in counter-rotation.

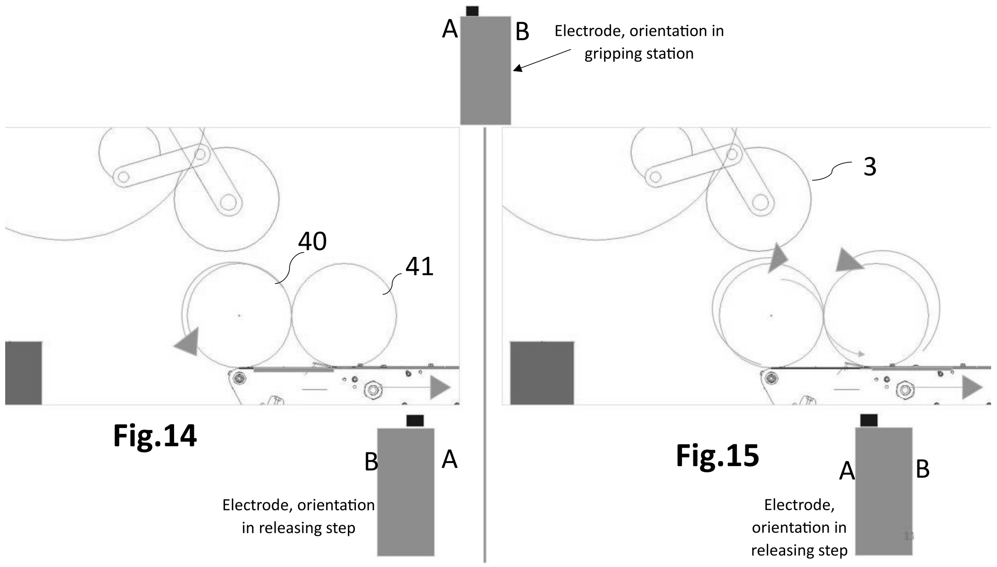

Similarly to the variant of the embodiment described above, in the station tangent to the proximal roller element of the flipping assembly, the first roller element of the gripping means can maintain the direction of rotation, exchanging the electrode with the counter-rotating proximal roller element which in turn transfers it to the belt, with flipping, therefore in the opposite orientation to the gripping orientation (Fig. 14). Alternatively, the first roller element reverses its direction of rotation and exchanges the electrode with the proximal roller element of the flipping assembly, which in turn transfers it to the distal roller element. The latter has a direction of rotation opposite to the belt, to which the electrode is transferred in a non-flipped setting, which is to say, in the same orientation with respect to the gripping orientation (Fig. 15).

In this case as well, similarly to the variant of the embodiment described above, further modes of operation are possible in addition to those just described, depending on the flexibility of the control of the roller elements, wherein it is understood that, in the experience of the Applicant, the mode of operation described above is the one that should take the shortest time for the electrode to pass from the gripping station to the releasing surface. For example, in one mode of operation, the first roller element 3 of the gripping means is configured to maintain the direction of rotation by exchanging the electrode with the counter-rotating proximal roller element 40. The latter can reverse the direction of rotation and subsequently transfer the electrode to the distal roller element 41. The latter has a direction of rotation opposite to the belt, to which the electrode is transferred in a non-flipped setting, which is to say, in the same orientation with respect to the gripping orientation (Fig. 15).

### Third embodiment

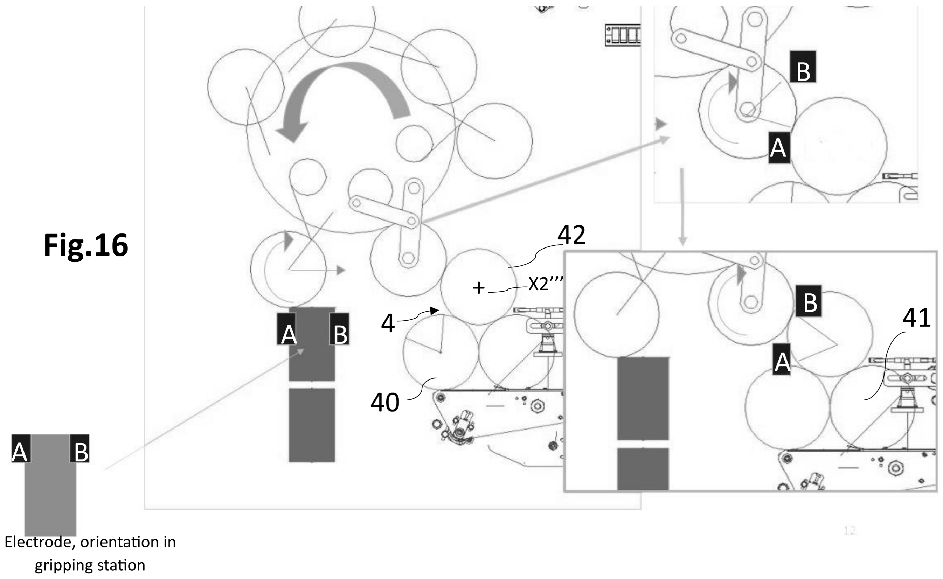

With reference to Fig. 16 through Fig. 18, a third embodiment of the invention is provided. In this configuration, while maintaining the elements in common with that described above, the configuration of the flipping assembly with three roller elements, tangent to one another, is peculiar. In this configuration, each of the roller elements is tangent to the other two and two roller elements 40, 41 are longitudinally aligned with one another and both tangent to the releasing surface of the conveyor belt, as well as rotatable with respect to own axes X2', X2". A third roller element 42, rotating about an own axis X2‴ is arranged above them. The third roller element therefore defines an input to the flipping assembly. The two roller elements tangent to the belt are instead outputs of the flipping assembly and are still identifiable with respect to the proximal or distal positioning in relation to the gripping station.

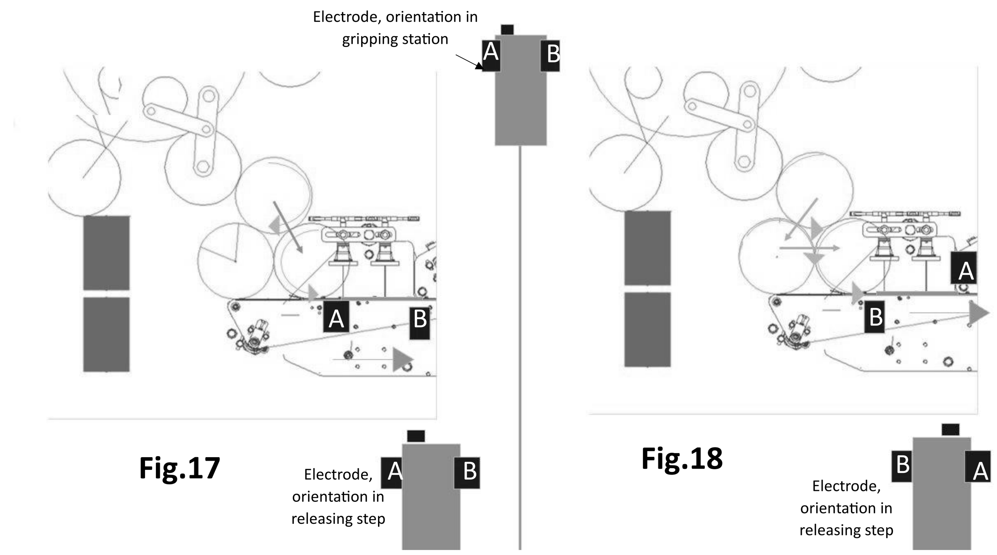

In this case as well, once the electrode has been picked up, the first roller element 2 of the gripping means is brought tangent to the input roller element 42. Once the first roller element has exchanged the electrode with the input roller element 42 of the flipping assembly, two modes of operation are possible:
1) The input roller element exchanges the electrode with the proximal roller element 40 which in turn exchanges it with the distal roller element 41. In this case, the input roller element 42 and the distal one have a direction of rotation opposite to that of the belt, the proximal roller element has a direction of rotation in accordance with the belt. The electrode is then released onto the belt exiting the flipping assembly by the distal roller element in an orientation opposite to that of pick-up from the gripping station (Fig. 18).
2) The input roller element 42, once it has received the electrode from the first roller element 2 of the gripping means, reverses its direction of rotation and exchanges the electrode directly with the distal roller element 41; the distal roller element 41 has a direction of rotation opposite to the belt and therefore the input roller is in counter-rotation with respect to it. Once it has been exchanged between the two rollers, the electrode is released from the distal roller element onto the belt, in the same orientation wherein it was picked up from the gripping station (Fig. 17).

As shown in the figures, the first roller of the gripping means is supported, in a planetary motion structure, by a rotatable support frame 5. In this embodiment example, the rotatable support causes the first roller element to roll on the electrode in the gripping station according to a direction consistent with the supply direction Y', therefore the first roller element rotates according to a direction consistent with the belt rotation.

The input roller element of the flipping assembly therefore has a direction of rotation opposite to that of the belt in the first mode of operation, while it reverses its own rotation to have a direction of rotation consistent with that of the belt in the second mode of operation.

### Fourth embodiment

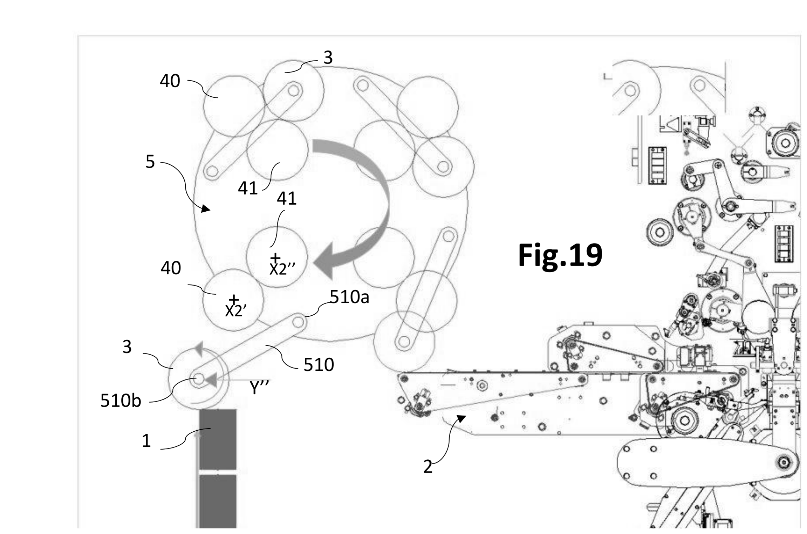

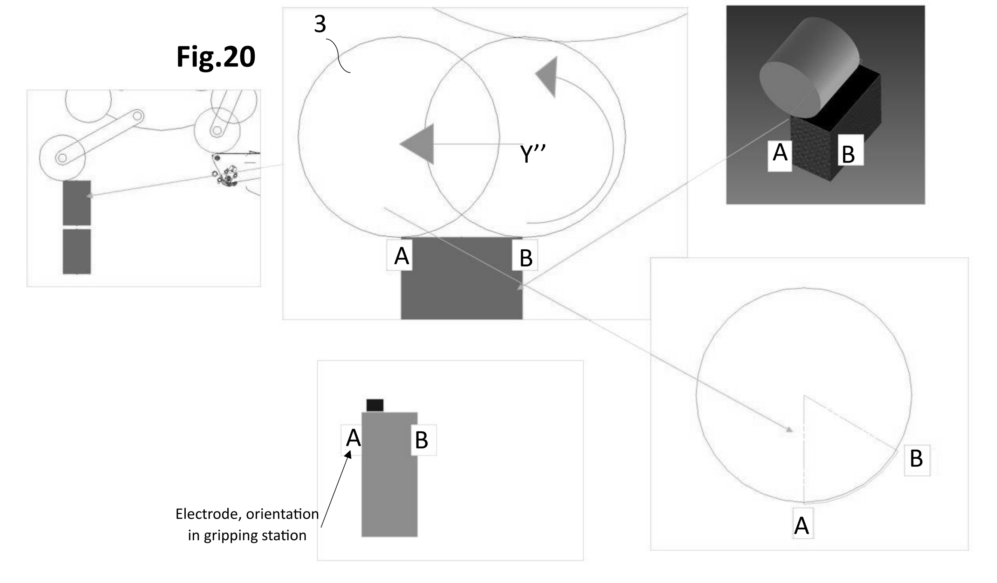

With reference to Fig. 19 through Fig. 27, a fourth embodiment of the present invention is shown.

In this case the flipping assembly is still made up of two roller elements 40, 41 arranged in line and tangent and rotatable about own axes X2', X2", however the flipping assembly is placed on the rotatable support frame 5, to which it is integral.

The first roller element 3 is made to roll by the rotatable support which moves it to grip the electrode in the gripping station 1 according to a direction Y" opposite to the supply direction Y'. It follows that the first roller element has a direction of rotation opposite to that of the belt, whereas the rotatable support has a direction of rotation consistent with that of the belt.

The first roller element 3 is connected to the rotatable support by an articulated joint 50 which moves it from the position tangential to the gripping station to a position tangential to the flipping assembly and in particular to both roller elements that make it up. In this case, with reference to the drawings, the articulated joint comprises a single arm 510 which has an end 510a rotatably connected to the support articulated on an own axis of rotation X4, and an opposite end 510b which rotatably supports the first roller element. Handling means move the arm - and therefore the first roller element - between the tangential position with the gripping station and that with the flipping assembly. Said handling means can be mechanical motor-driven devices, cam-driven devices, or other solutions that can be implemented in an obvious manner by a person skilled in the art.

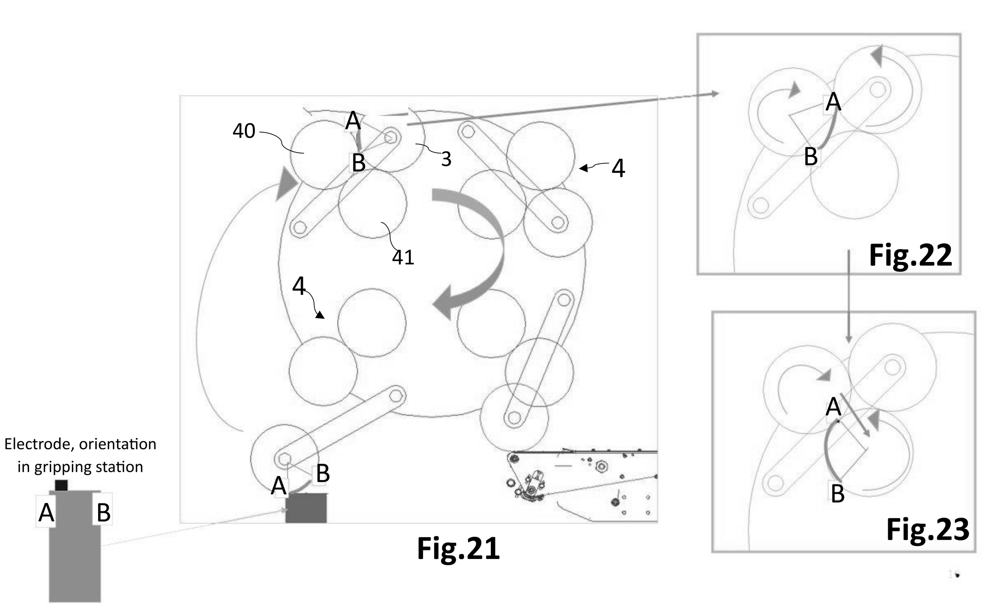

In a first mode of operation, when entering into tangency with the flipping assembly (Fig. 21), the first roller element exchanges the electrode with an input roller element 40, which is counter-rotating with respect to said first roller element (Fig. 22).

Subsequently, the input roller element exchanges the electrode with the second roller element 41, which is to say, with an output roller element of the flipping assembly (Fig. 23). In said step, the output roller element has a direction of rotation that is consistent with the first roller element.

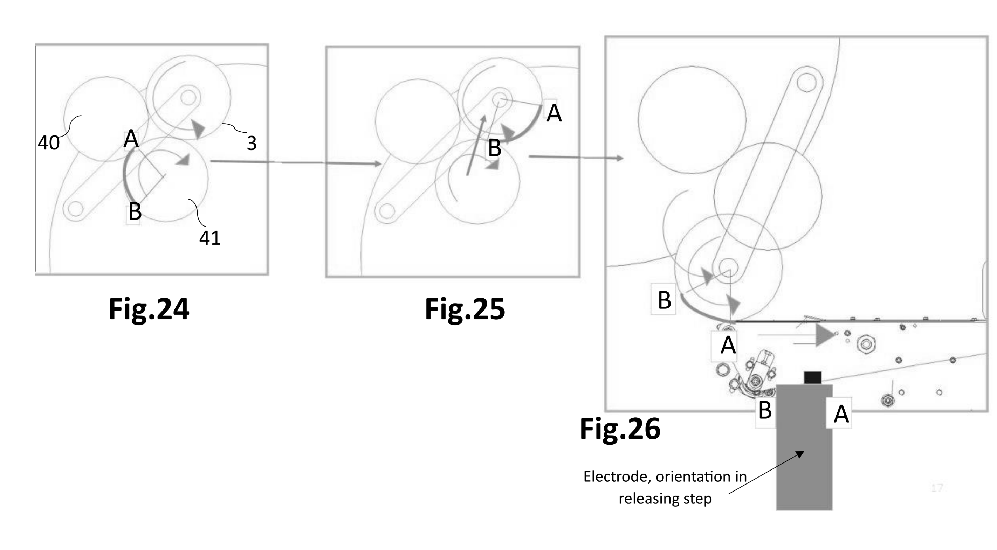

At this point, the output roller element 41 reverses its direction of rotation (Fig. 24) so as to be in a counter-rotation condition with respect to the first roller element 3 and therefore deliver the electrode to it (Fig. 25) in a flipped configuration, which is to say, with the opposite orientation to the orientation of the gripping station.

The first roller element then detaches from the flipping assembly and moves into a position tangential to the conveyor belt 2, onto which it unloads the electrode with the opposite orientation to that of the gripping orientation (Fig. 26).

Alternatively, in a second mode of operation, the first roller element of the gripping means 3, once the electrode has been picked up from the gripping station 1, reverses its direction of rotation to exchange the electrode with the counter-rotating input roller element of the flipping assembly. The electrode is then exchanged between the two rollers of the flipping assembly and then passed again from the output roller element 41 to the first roller element of the gripping means 3, which has once again reversed its direction of rotation to return to the counter-rotating configuration with respect to the conveyor belt 2.

In a third mode of operation, the first roller element of the gripping means 3 exchanges the electrode with the counter-rotating input roller element of the flipping assembly. The input roller element 40, once the electrode has been picked up, reverses its own direction of rotation and transfers the electrode to the output roller element 41 in counter-rotation. In turn, the output roller element 41 transfers the electrode to the first roller element of the gripping means 3, which has maintained its direction of rotation opposite to the conveyor belt 2.

In a fourth mode of operation, the first roller element 3 transfers to the input roller element 40 of the flipping assembly, which in turn transfers it to the output roller element 41. Meanwhile, the first roller element 3 has reversed the direction of rotation to pick up the electrode from the output roller element 41. Once the electrode has been picked up from the flipping assembly, the first roller element 3 of the gripping means once again reverses its direction of rotation to return to the pick-up configuration, which is to say, in counter-rotation to the belt.

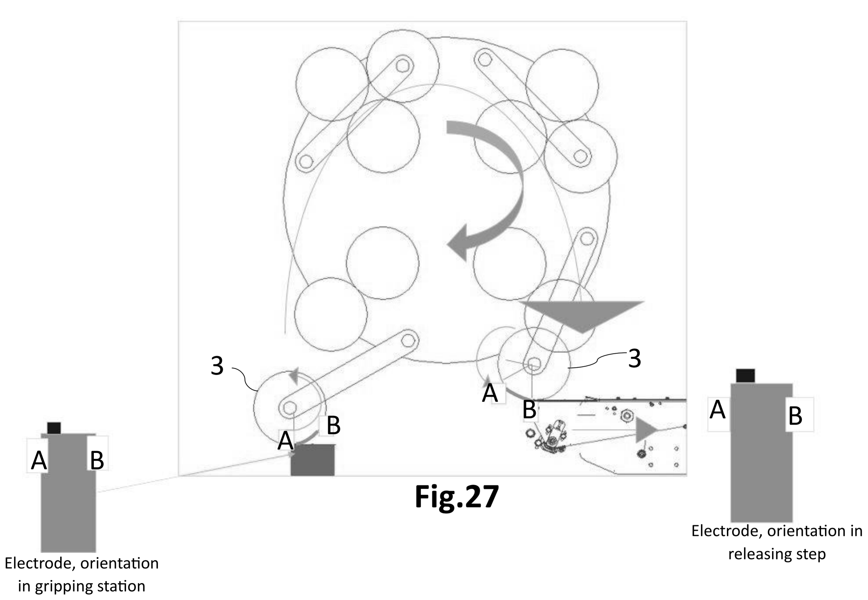

Alternatively, as shown in Fig. 27, if it is necessary to supply the electrode to the belt according to an orientation consistent with the gripping one, the first roller element bypasses the flipping assembly and is taken from the gripping station directly to the position tangential to the conveyor belt.

In the case wherein the rotatable support frame were to comprise a plurality of first roller elements of the gripping means distributed in an orderly fashion on the periphery of the support, a dedicated flipping assembly will be provided for each of them as described above. Therefore, in one embodiment, the rotatable support supports a defined number of roller elements of the gripping means and an equal number of flipping assemblies.

### Fifth embodiment

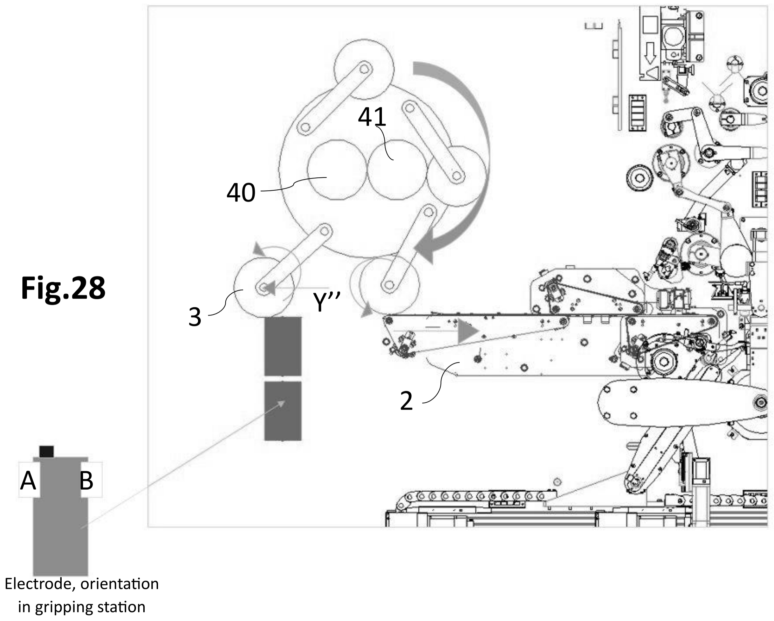

With reference to Fig. 28 through Fig. 35, a fifth embodiment of the invention is shown which comprises a flipping assembly 4 arranged on the rotatable support frame but independent of the rotational motion thereof. The flipping assembly comprises two roller elements, 40, 41, mutually tangent and aligned, of which one input roller element 40 and one output roller element 41. The two roller elements are rotatable about own axes X2', X2".

In this case as well, as required in the embodiment example, the support 5 is rotatable about the axis X3 with a direction of rotation consistent with the belt 2, whereas the first roller element 3 of the gripping means is counter-rotating and rolls tangentially to the gripping station according to a direction Y" opposite to the supply direction.

The first roller element 3 of the gripping means is still - as in the previous example - connected to the rotatable support with an articulated joint 50 comprising an arm 510 which moves the first roller element between the gripping station and a position tangential to the input roller element of the supply unit.

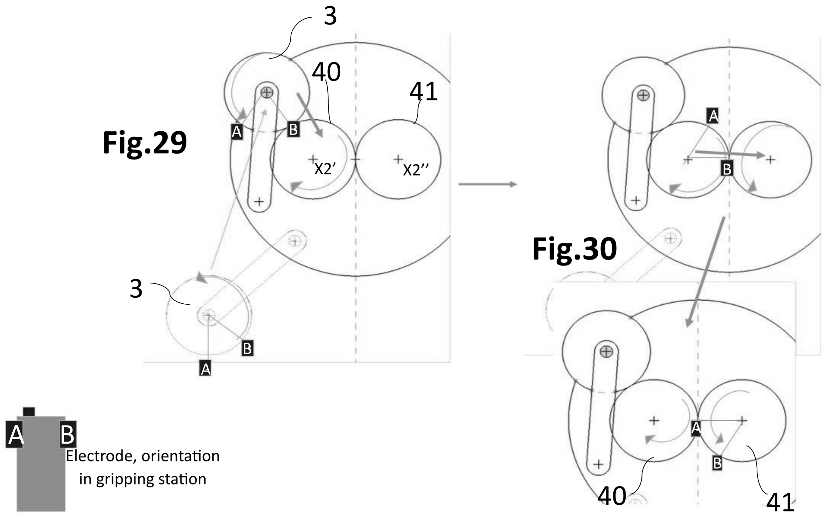

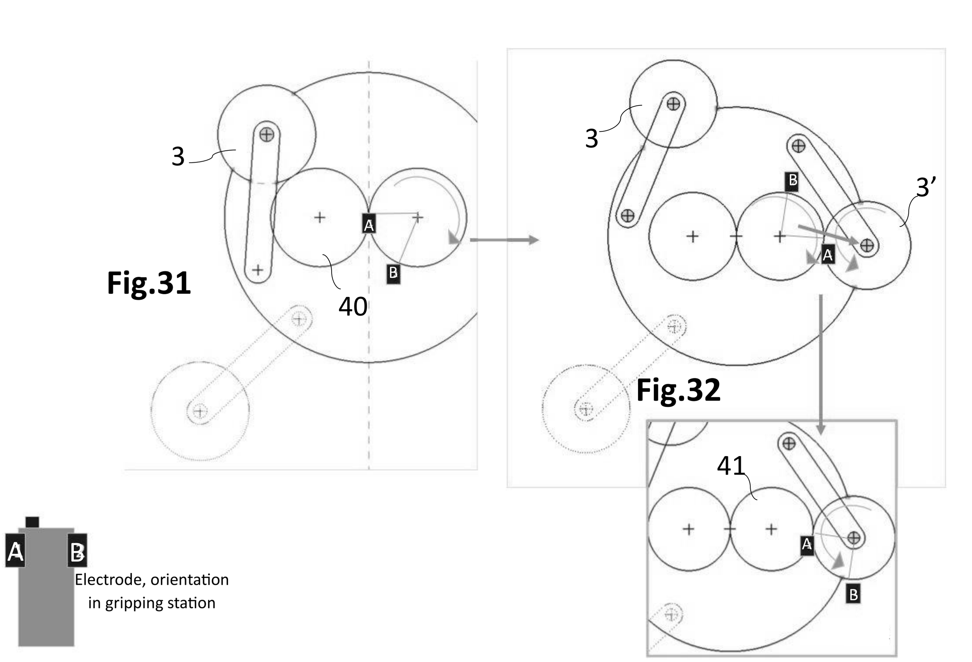

In said position (Fig. 29), the first roller element 3 exchanges the electrode with the input roller element 40 of the supply group which counter-rotates relative to the first roller element. Subsequently, the input roller element exchanges the electrode with the output roller element 41 of the flipping assembly, counter-rotating with respect to the input roller element (Fig. 30). Once the electrode has been acquired, the output roller element 41 of the flipping assembly reverses its direction of rotation to unload the electrode onto the perimeter surface of a second roller element 3' of the gripping means in the flipped position, which is to say, with the opposite orientation to the gripping orientation (Fig. 32).

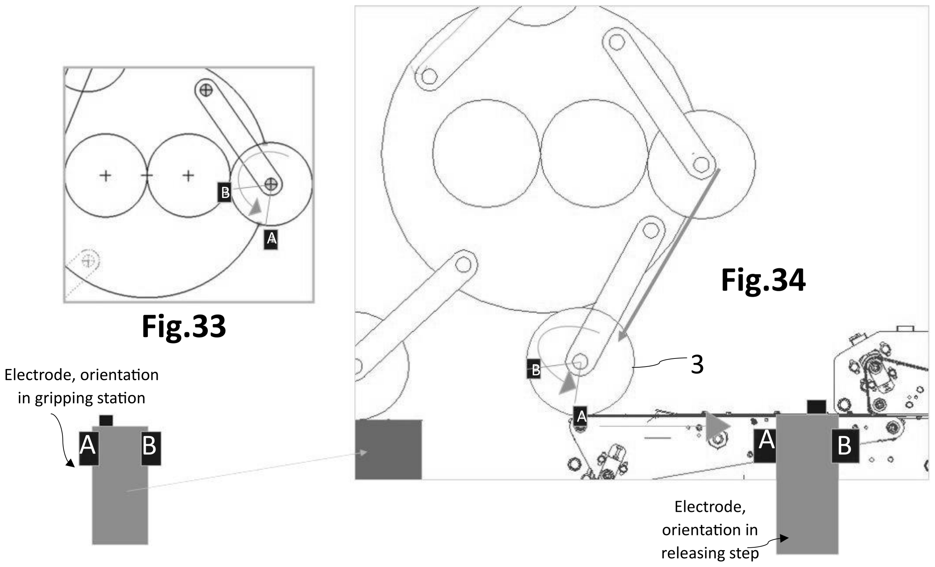

The second roller element 3', similarly to the first roller element 3, is connected to the rotatable support by means of an articulated arm 510 which obtains its movement between the position tangential to the flipping assembly and the conveyor belt, onto which the electrode is unloaded with the reversed orientation (Fig. 33 and Fig. 34).

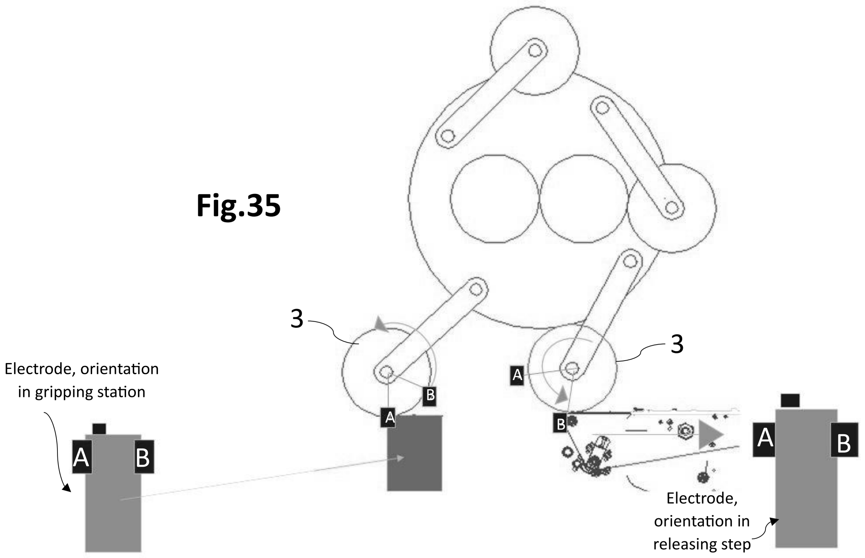

Alternatively, if there is no need to change the orientation of the electrode, the first roller element picks up the electrode from the gripping station and brings it directly onto the belt, bypassing the flipping assembly (Fig. 35).

Similarly to the fourth embodiment example described above, it is here too possible to control the system - and in particular the directions of rotation of the roller elements - in alternative modes to the one described above, even if they are eventually less efficient in terms of the time it takes the electrode to pass from the gripping station to the releasing surface.

For example, in a second mode of operation, the first roller element of the gripping means 3, once the electrode has been picked up from the gripping station 1, reverses its direction of rotation to exchange the electrode with the counter-rotating input roller element of the flipping assembly. The electrode is then exchanged between the two rollers of the flipping assembly and subsequently passed from the output roller element 41 which transfers it to the second roller element 3' which has a direction of rotation opposite to that of the belt 2.

In a third mode of operation, the first roller element of the gripping means 3 exchanges the electrode with the counter-rotating input roller element of the flipping assembly. The input roller element 40, once the electrode has been picked up, reverses its own direction of rotation and transfers the electrode to the output roller element 41 in counter-rotation. In turn, the output roller element 41 transfers the electrode to the second roller element of the gripping means 3, which has maintained its direction of rotation opposite to the conveyor belt 2.

In a fourth mode of operation, the first roller element 3 transfers to the input roller element 40 of the flipping assembly, which in turn transfers it to the output roller element 41. The second roller element 3' picks up the electrode from the output roller element 41 with a direction of rotation consistent with that of the belt. Once the electrode has been picked up from the flipping assembly, the second roller element 3 of the gripping means reverses its direction of rotation to return to the pick-up configuration, which is to say, in counter-rotation to the belt.

Once again, in the case in which the rotatable support were to be fitted with a plurality of roller elements of the gripping means, the first and second roller elements would be a pair of roller elements of this plurality arranged in a polar position on the periphery of the support itself.

With reference to the embodiments described above, it should be noted that the roller elements are configured in such a way as not to interfere with one another. In detail, it is evident that two complete rollers can move tangentially only if they are counter-rotating. Therefore, in the case in which the implemented solutions were to foresee for the use of rollers with a circular cross-section and a regular radius, solutions would be provided that mutually detach the rollers when one of them is controlled with reverse rotation. Instead, in solutions wherein the rollers have at least one circular sector and a portion that is blank or with reduced radius, the exchange of the electrode is obtained by tangency of the respective circular sectors, whereas the step of reversal of the direction of rotation corresponds to a non-tangential position of the rollers which face either the blank portion or the portion with reduced radius.

It has moreover been stated that the pick-up station can be defined by a magazine of the apparatus for the manufacture of electrochemical cells or semi-finished electrochemical cell products. Solutions can also be envisaged wherein there is more than one magazine, and wherein the gripping roller elements work in succession on each of these magazines.

Each gripping station can moreover be fixed or movable according to a longitudinal axis Y, in relative motion with respect to the gripping roller element.

If necessary, the gripping station can also be movable on an axis Z moving towards and/or moving away from the roller.

The magazine can contain electrodes that are all arranged in the same orientation or in random orientation. Similarly, in the case of multiple magazines, solutions can be envisaged wherein each magazine arranges electrodes according to a specific orientation or in a random manner. In order to check the orientation of the electrode in the pick-up station and therefore determine whether it is correctly oriented or not, cameras can be provided that frame the electrode in the pick-up station and send a signal to the flipping device, a signal that determines the rotation of the roller elements and their movement depending on whether the electrode needs to be flipped or not.

The present invention has been described up to this point with reference to its preferred embodiments. It is understood that other embodiments can exist which relate to the same inventive core, all falling within the scope of protection of the following claims.

## Claims

1. A device for selectively flipping a sheet electrode, wherein said sheet electrode comprises a first face and a second face opposite to one another, which define a first orientation AB and a second orientation BA depending on their exposure, wherein said flipping device comprises:
- a gripping station (1) defining a plane XY wherein said electrode is arranged in said first orientation AB;
- gripping means comprising at least one first roller element (3) rotatable about an own axis of rotation X1 and configured to at least pick up said electrode from said gripping station (1) wherein said electrode is in said first orientation AB with a rolling motion, wherein said first roller element (3) has at least one cylindrical sector defining a peripheral surface configured to pick up and retain said electrode, wherein said at least one first roller element is at least rotatable about an own axis of rotation X1;
- flipping means for flipping said electrode comprising at least:
- at least one further roller element (4, 40, 41) rotatable about an own axis of rotation X2, having at least one cylindrical sector defining a peripheral surface configured to pick up and retain said electrode downstream of the first rotating roller element,
- means for controlling the direction of rotation of said first roller element and/or of said further roller element configured to selectively control the direction of rotation about said axes of rotation X1, X2, whereby said electrode picked up from said gripping station (1) according to said first orientation is selectively flipped to assume a second orientation.

2. Selective flipping device according to claim 1, moreover comprising retaining means for retaining said electrode relating to said peripheral surface of said roller elements, wherein said retaining means are switchable between an activated function wherein they exert the action of attraction of the electrode and keep it adhered to the peripheral surface and a deactivated function wherein they do not exert said action of attraction and they release the electrode.

3. Selective flipping device according to any one of the preceding claims, moreover comprising handling means for moving said at least one first roller element (3) of said gripping means in rotation on said gripping station (1) and from said gripping station (1) to a position tangential to said at least one further roller element (4, 40, 41) of said flipping means.

4. Selective flipping device according to claim 3, wherein said handling means comprise a support frame (5) rotatable about an own axis of rotation X4, parallel to the axis of rotation X1 of said at least one first roller element (4, 40, 41) of said gripping means.

5. Selective tilting device according to claim 4, wherein said rotatable support frame (5) is configured to rotate about an own axis of rotation (X3) according to a first direction of rotation, wherein said at least one first roller element is connected to said rotatable support in a peripheral position and is rotatable according to a direction of rotation opposite to said first direction of rotation; wherein said at least one first roller element (3) is connected to said rotatable support (5) by means of an articulated joint (50) movable with respect to said rotatable support; wherein said at least one further roller element (4, 40, 41) includes a first further roller element (40) rotatable about an own axis of rotation X2', wherein it has a cylindrical sector configured to pick up and retain said electrode and a second further roller element (41) rotatable about an own axis of rotation X2" and tangent to said first further roller element, wherein said second further roller element has a cylindrical sector configured to pick up and retain said electrode

6. Selective flipping device according to claim 4 or 5, wherein said at least one first roller element (4, 40, 41) of said gripping means is connected to said rotatable support frame (5) in a peripheral position thereof, in a planetary configuration, by means of an articulated joint (50), wherein said articulated joint comprises at least a first arm (510), wherein a first end (510a) of said first arm (510) is rotatably connected about an own axis of rotation X3 to the rotatable support frame (5) and wherein a second end (510b) of said first arm (510) rotatably supports said at least one first roller element (4, 40, 41) of said gripping means about an own axis X1.

7. Selective flipping device according to any one of claim 3 through claim 6, wherein said articulated joint (50) is such to linearize, along a rectilinear trajectory Y, the motion of said at least one first roller element (4, 40, 41) of the gripping means positioned tangentially to said electrode arranged in the gripping station (1).

8. Selective flipping device according to any one of claim 3 through claim 7, wherein said rotatable support frame (5) is fitted in an orderly and circumferentially spaced manner with a plurality of gripping means, each comprising a roller element.

9. Selective flipping device according to any one of the preceding claims wherein said flipping means comprise two roller elements (40, 41), tangent to one another.

10. Selective flipping device according to the preceding claim wherein said further roller element (4, 40, 41) is configured to selectively reverse its own direction of rotation about said axis X2 after having picked up said electrode from said first roller element (3) and wherein a roller element of said two roller elements comprises at least one cylindrical sector defining a peripheral surface configured to pick up and retain said electrode downstream of said further rotatable roller element (4, 40, 41).

11. Selective flipping device according to claim 9 or claim 10, wherein said flipping means comprise a third roller element (42), tangent to said pair of roller elements, wherein said three rollers are mutually tangent.

12. Selective flipping device according to any one of the preceding claims moreover comprising a conveyor belt (2) for feeding the electrode to a workstation, which moves said electrode according to a supply direction Y', wherein said conveyor belt (2) defines at least one linear section (20) which develops according to a longitudinal axis Y and wherein the linear section is movable according to said supply direction Y', wherein said linear section (20) defines a support plane XY' movable according to said supply direction, wherein said movement of said linear section (20) in said supply direction Y' is provided by the rotation of belt tensioning rollers, rotatable according to their own direction of rotation.

13. Method to selectively flip a sheet electrode, wherein said sheet electrode comprises a first face and a second face opposite to one another, which define a first orientation AB and a second orientation BA depending on their exposure, wherein said method comprises the following steps:
A. Making said electrode available at a gripping station (1) according to a first orientation AB;
B. Picking up said electrode from said gripping station (1) according to said first orientation AB by means of gripping means comprising a roller element (3), with a rolling motion of said roller or roller portion on said electrode.
C. Moving said roller element of said gripping means between said gripping station and a position tangent to a further roller element (4, 40, 41) of the flipping means, wherein said further roller element (4, 40, 41) is rotatable about an own axis of rotation X2;
said method moreover comprising the step of selectively controlling the direction of rotation of said first roller element and/or of said further roller element about said axes of rotation X1, X2, whereby said electrode picked up from said gripping station according to said first orientation AB or second orientation BA is selectively flipped ed to assume a second orientation BA or first orientation AB.

14. Apparatus for the manufacture of an electrochemical cell or a semi-finished electrochemical cell product comprising a selective flipping device of an electrode according to any combination of claim 1 through claim 12, wherein said apparatus comprises:
one or more magazines for containing an ordered plurality of electrodes oriented according to a first orientation AB or second orientation BA, each of said one or more magazines defining said gripping station (1) of said flipping device,
said apparatus moreover comprising a conveyor belt (2) at a workstation that moves said electrode according to a supply direction Y', wherein said conveyor belt (2) defines at least one linear section (20) extending according to a longitudinal axis Y and movable according to said supply direction Y', wherein said linear section (20) defines a support plane XY' movable according to said supply direction, wherein said movement of said linear section in said supply direction Y' is provided by the rotation of belt tensioning rollers, rotatable according to an own direction of rotation.

15. Method for the manufacture of an electrochemical cell or a semi-finished electrochemical cell product in an apparatus according to claim 14, comprising the following steps:
A. Picking up said electrode from said gripping station (1) according to said first orientation AB by means of gripping means comprising a roller element (3), with a rolling motion of said roller or roller portion on said electrode.
B. Moving said roller element (3) of said gripping means between said gripping station and a position tangent to a further roller element (40, 41) of the flipping means, wherein said further roller element is rotatable about an own axis of rotation X2;
said method moreover comprising the step of selectively controlling the direction of rotation of said first roller element (3) and/or of said further roller element (4, 40, 41) about said axes of rotation X1, X2, whereby said electrode picked up from said gripping station (1) according to said first orientation AB or second orientation BA is selectively flipped to assume a second orientation BA or first orientation AB.
